# EUROPEAN PATENT APPLICATION

(11) **EP 2 072 865 A2**
(43) Date of publication of application: **24.06.2009**
(21) Application number: 08171952.8
(22) Date of filing: 17.12.2008
(51) Int. Cl.: F16H 61/12

(54) **Controller for automatic transmission**

(30) Priority: 18.12.2007 JP 2007325948
(71) Applicant: Toyota Jidosha Kabushiki Kaisha, Toyota-shi, Aichi 471-8571 (JP)
(72) Inventor: Nakamura, Kazuaki, Toyota-shi, Aichi 471-8571 (JP); Monji, Fuminori, Toyota-shi Aichi 471-8571 (JP)
(74) Representative: TBK-Patent

(57) **Abstract**

During a period wherein a manual shift valve moves to a P gear range position after issuance of a D-to-P instruction instructing that a vehicle be stopped, an interior of an automatic transmission is interlocked. Specifically, the interior of the automatic transmission is interlocked by, in addition to engagement of a first clutch serving as a friction engagement element of a first gear range of the automatic transmission, by engaging a second brake causing an engine brake to act and a third brake forming a reverse gear range, and therefore, motion of the vehicle is prevented in a period between issuance of the P instruction instructing a vehicle stop operation, and actual shifting to the P gear range.

## Description

### BACKGROUND OF THE INVENTION

This application claims priority on Patent Application No. 2007-325948 filed in Japan on December 18th, 2007, the entire contents of which are hereby incorporated herein.

The present invention relates to an automatic transmission mounted on a vehicle, and more specifically, to a controller for an automatic transmission using a shift-by-wire type gear shift device shifting a gear range using an actuator.

With regard to a vehicle whereupon an engine (i.e., an internal combustion engine) is mounted, an automatic transmission automatically and optimally setting a gear ratio between the engine and a drive wheel is known as a transmission for suitably transmitting torque and rotation speed generated by the engine to the drive wheel in accordance with a driving condition of the vehicle.

A planetary gear type transmission setting a gear range using a planetary gear device in addition to friction engagement elements such as a clutch and a brake, etc. and a belt-type continuously variable transmission (CVT) performing stepless adjustment of a gear ratio are examples of an automatic transmission mounted in a vehicle.

In a vehicle whereupon a planetary-gear type automatic transmission is mounted, a gear-shift map having a gear-shift line (i.e., a gear-range shift line) for achieving an optimum gear range for a current vehicle speed and degree of throttle opening (or degree of accelerator opening) is recorded in an electronic control unit (ECU), etc.; a target gear range is calculated by referring to the gear-shift map based on the vehicle speed and degree of throttle opening; and based on the target gear range, a gear range is automatically set by engaging and/or disengaging friction engagement elements such as a clutch, a brake, and a one-way clutch, etc. in a prescribed condition.

One example of a controller controlling such an automatic transmission is a so-called shift-by-wire type gear shift device (see, for example, JP2000-170905 (hereinafter referred to as "Patent Document 1")), detecting a gear-range position of the automatic transmission electrically using a sensor (for example, a neutral start switch) and shifting gear ranges such as parking (P), reverse (R), neutral (N), and drive (D), etc. by driving an actuator for gear-range shift such as an electric motor, etc. based on a detection signal of the sensor so as to change a position of a manual shift valve of the automatic transmission.

Furthermore, in an automatic transmission having such a shift-by-wire type gear shift device, there is no need to mechanically connect a gear shift lever and the gear shift mechanism as in a general automatic transmission, or in other words, a transmission using a method (for example, a gear-range shifting method using a cable) whereby a gear range is shifted directly via an operation of the gear shift lever performed by a user (i.e., a driver), and therefore, no positioning restrictions apply when mounting the corresponding components on the vehicle and a degree of design freedom can be increased. Furthermore, this configuration is also advantageous in that operations for mounting on the vehicle can be performed easily.

It should be noted that technologies relating to the shift-by-wire type of gear shift device are disclosed in Japanese Patent No. 3,575,357 (hereinafter referred to as "Patent Document 2") and in JP2004-308847 (hereinafter referred to as "Patent Document 3").

With the technology disclosed in Patent Document 2, if a command for selection of the parking (P) gear range is issued in a case wherein the vehicle is moving, shock is prevented by decelerating the vehicle using an automatic brake until a preset vehicle speed for determination of a vehicle-stopped condition is reached and by then operating a parking lock mechanism using a parking lock actuator after that present vehicle speed is reached.

With the technology disclosed in Patent Document 3, motion of the vehicle is prevented upon shifting of the gear shift lever from the drive (D) position to the parking (P) position by releasing hydraulic pressure of a clutch so as to realize a condition wherein transmission of driving force is cutoff.

Incidentally, with a direct-shift type of automatic transmission using a cable, a solenoid valve and hydraulic servo disposed inside the automatic transmission are already in a non-drive condition at a point in time whereat the user (i.e., the driver) operates the gear shift lever to the P or N position, and therefore, a vehicle stop operation of the automatic transmission (i.e., an internal condition of the automatic transmission) is substantially synchronized with the vehicle stop operation of the user.

In contrast, with a shift-by-wire type of automatic transmission, an actuator (or a motor) of the gear shift device performs drive after a point in time whereat the user instructs shifting from the D or R gear range to the P or N range via an operation of a button or the gear shift lever, and therefore, a discrepancy exists between the vehicle stop operation of the user and the internal condition of the automatic transmission. Consequently, even when the user has instructed that the P or N range be selected, driving force is transmitted inside the automatic transmission with the D or R gear range selected for a certain period of time, and consequently, there is a possibility that a delay may occur between execution of a stop operation (for example, operation of a stop switch) and stopping of the vehicle due to release by the hydraulic servo and cutting off of transmission of driving force.

It should be noted that, although the above-explained delay of vehicle stopping can be prevented in a vehicle whereupon an automatic brake (ECB) is mounted by operating an automatic brake at a point in time whereat the instruction for shifting from the D or R gear range to the P or N range is issued, control of this kind cannot be realized in a vehicle whereupon an automatic brake has not been mounted.

Furthermore, in a case wherein an actuator such as a motor, etc. of a shift-by-wire type of automatic transmission fails while the D or R gear range is selected, there is a possibility that the transmission of driving force cannot be cut off even if the user moves the gear shift lever to the P or N position, and the vehicle will move in such a condition.

In light of such existing circumstances, it is an object of the present invention to realize control capable of stopping motion of the vehicle upon execution of a vehicle-stop operation in an automatic transmission using a shift-by-wire type of gear shift device shifting a gear range using an actuator.

### SUMMARY OF THE INVENTION

A feature of the present invention is that, in a controller for an automatic transmission mounted on a vehicle and wherein it is assumed that a gear range is shifted using an actuator, an interior of the automatic transmission is interlocked during a period wherein a shift member (or more specifically, a manual shift valve), moving due to driving of the actuator, moves to a stopped-position gear range or a neutral gear range following issuance of an instruction to shift from a forward-travel (D) gear range to the stopped-position (P) gear range or the neutral (N) gear range (i.e., a D-to-P/N instruction) or an instruction to shift from a reverse-travel gear range to the stopped-position gear range or the neutral gear range (i.e., an R-to-P/N instruction).

With this aspect of the present invention, motion of the vehicle can be prevented by interlocking the automatic transmission during a period between issuance of a P instruction or N instruction, instructing an operation to the P gear range or the N range by the user, and actual shifting to the P gear range or the N range, and therefore, the possibility of the user feeling discomfort can be eliminated.

With the present invention, a position determination means may be provided for determining that the shift member moving due to driving of the actuator has reached the stopped-position gear range or the neutral gear range, and interlocking of the automatic transmission may be released when the shift member has reached the stopped-position gear range or the neutral gear range. In such a case, the gear range requested (through an operation) by the user (i.e., the P or N range) can be realized.

With the present invention, in a case wherein the automatic transmission is a stepped automatic transmission establishing a plurality of gear ranges having different gear ratios by selectively engaging a plurality of friction engagement elements, the automatic transmission may be interlocked by engaging a friction engagement element causing an engine brake to act (for example, a second brake B2) when the automatic transmission is set to a first gear range, and a friction engagement element of a prescribed gear range other than the first gear range (for example, a third brake B3, forming the reverse-travel gear range).

Examples of other resolution means of the present invention are described hereinafter.

In a first example of a configuration of a controller for an automatic transmission mounted on a vehicle and wherein it is assumed that a gear range is shifted using an actuator, a failure determination means for determining failure of the actuator is provided, and an interior of the automatic transmission is interlocked in a case wherein failure of the actuator in a forward-travel gear range or a reverse-travel gear range is determined by the failure determination means following issuance of an instruction to shift from the forward-travel gear range to the stopped-position gear range or the neutral gear range or an instruction to shift from the reverse-travel gear range to the stopped-position gear range or the neutral gear range.

With this aspect of the present invention, motion of the vehicle can be prevented in a case wherein an instruction to shift to the stopped-position gear range or the neutral gear range has been issued.

It should be noted that, in addition to failure of the motor serving as the drive source (for example, due to rotor sticking or wire disconnection, etc.), failure of the actuator also includes failure due to seizure of a mechanism section extending from the motor to the shift member (i.e., the manual shift valve).

With the present invention, in a case wherein the automatic transmission is a stepped automatic transmission establishing a plurality of gear ranges having different gear ratios by selectively engaging a plurality of friction engagement elements, the automatic transmission may be interlocked by engaging a friction engagement element causing an engine brake to act (for example, a second brake B2) when the automatic transmission is set to a first gear range, and a friction engagement element forming the reverse-travel gear range (for example, a third brake B3).

As another resolution means, furthermore, with a controller for an automatic transmission mounted on a vehicle and shifting a gear range using an actuator, reverse-travel driving of the automatic transmission may be prohibited following issuance of an instruction to shift to the stopped-position gear range. Specifically, in a case wherein the automatic transmission is a stepped automatic transmission establishing a plurality of gear ranges having different gear ratios by selectively engaging a plurality of friction engagement elements, the controller for the automatic transmission can be configured such that engagement of a friction engagement element forming the reverse-travel gear range (for example, a second brake B2) is prohibited following issuance of the instruction to shift to the stopped-position gear range.

In such a case, reverse travel of the vehicle upon execution of a vehicle stop operation by the user can be prevented.

As a further resolution means, a controller for an automatic transmission mounted on a vehicle, shifting a gear range using an actuator, and having a multispeed configuration establishing a plurality of gear ranges having different gear ratios by selectively engaging a plurality of friction engagement elements can be configured such that, for example, when the vehicle is stopped in a forward-travel gear range (i.e., upon execution of a vehicle stop operation), a friction engagement element forming a reverse-travel gear range (i.e., a third brake B3) and a friction engagement element of a prescribed gear range other than the reverse-travel gear range (i.e., a second brake B2) are engaged.

With this aspect of the present invention, when the vehicle is stopped with a forward-travel gear range selected, the interior of the automatic transmission is interlocked by engaging a friction engagement element forming a reverse-travel gear range and a friction engagement element of a prescribed gear range other than the reverse-travel gear range, and therefore, reverse travel of the vehicle when stopped on an incline can be prevented.

With the present invention, upon start of the vehicle, the friction engagement element of a prescribed gear range other than the reverse-travel gear range may be disengaged after disengaging the friction engagement element of the reverse-travel gear range. In this way, by disengaging the friction engagement element of the reverse-travel gear range first when the vehicle is start, rolling backwards of the vehicle on an incline can be prevented.

### BRIEF DESCRIPTION OF THE DRAWINGS

FIG. 1 is a schematic configuration diagram of a vehicle fitted with an automatic transmission whereto the present invention is applied.

FIG. 2 is a skeleton view of the automatic transmission shown in FIG. 1.

FIG. 3 is an operation chart of the automatic transmission shown in FIG. 2.

FIG. 4 is a circuit configuration diagram showing a section of a hydraulic control circuit of the automatic transmission shown in FIG. 2.

FIG. 5 is a perspective view showing a schematic configuration of a range shifting mechanism.

FIG. 6 is a view showing a shift gate of a gear range switch.

FIG. 7 is a view showing an example of a gear-shift map.

FIG. 8 is a flowchart showing an example of a vehicle stop control executed by an ECU.

FIG. 9 is a timing chart showing an example of a vehicle stop control executed by the ECU.

FIG. 10 is a timing chart of a conventional control.

FIG. 11 is a flowchart showing another example of a vehicle stop control executed by the ECU.

FIG. 12 is a flowchart showing another example of a vehicle stop control executed by the ECU.

FIG. 13 is a timing chart showing another example of a vehicle stop control executed by the ECU.

FIG. 14 is a flowchart showing another example of a vehicle stop control executed by the ECU.

### DESCRIPTION OF THE PREFERRED EMBODIMENTS

The following is a description of preferred embodiments of the present invention, with reference to the drawings.

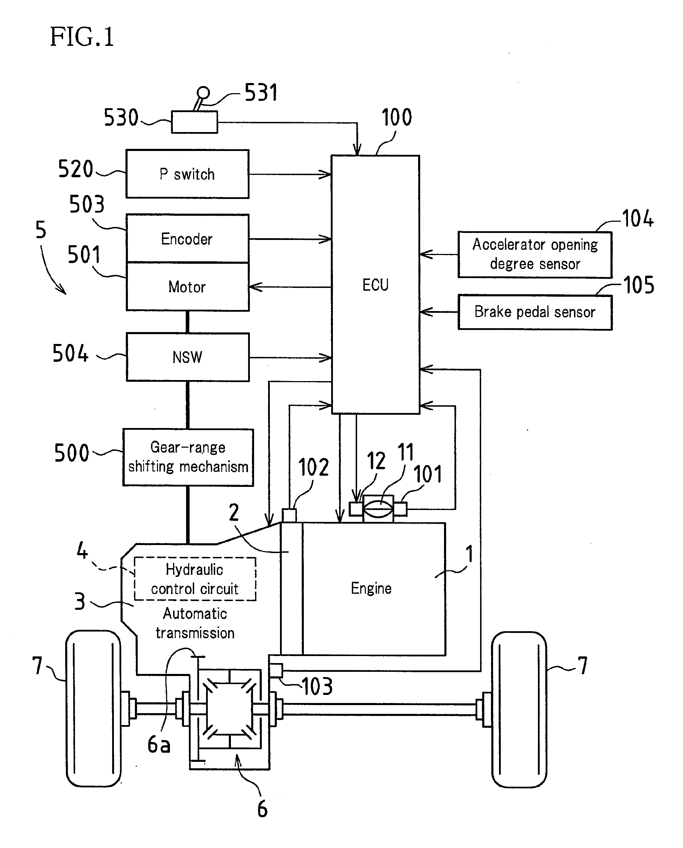

FIG. 1 is a schematic configuration diagram of a vehicle whereto the present invention is applied.

A vehicle used in the present embodiment is a front-engine, front-drive (FF) type vehicle whereupon an engine (i.e., an internal combustion engine) 1 serving as a source of driving force for the vehicle, a torque converter 2, an automatic transmission 3, a shift-by-wire type gear shift device 5 shifting a shift range of the automatic transmission 3, a differential gear device 6, and an ECU 100, etc. are mounted.

A crankshaft (not shown) serving as an output shaft of the engine 1 is connected to the torque converter 2, and an output of the engine 1 is transmitted from the torque converter 2 to the differential gear device 6 via the automatic transmission 3, etc. and is distributed to left and right drive wheels 7.

The engine 1, the torque converter 2, the automatic transmission 3, the gear shift device 5, and the ECU 100 are explained hereinafter.

- Engine -
The engine 1 is, for example, a multiple cylinder gasoline engine. A quantity of intake air drawn into the engine 1 is adjusted by an electronic-control type throttle valve 11. The throttle valve 11 is capable of electronically controlling a degree of throttle opening independent of an accelerator-pedal operation performed by a driver, and the throttle-opening degree is detected by a throttle-opening degree sensor 101.

The throttle-opening degree of the throttle valve 11 is driven and controlled by the ECU 100. In specific terms, the throttle-opening degree of the throttle valve 11 is controlled such that an optimum intake air quantity (i.e., an target air-intake quantity) for current operation conditions of the engine 1, such as the engine speed, a degree of accelerator-pedal depression (i.e., an accelerator opening degree), etc. can be acquired. More specifically, the actual throttle-opening degree of the throttle valve 11 is detected using the throttle-opening degree sensor 101, and a throttle motor 12 of the throttle valve 11 is subjected to feedback control such that that actual throttle-opening degree matches the throttle-opening degree at which the above-mentioned target air-intake quantity is acquired (i.e., a target throttle-opening degree).

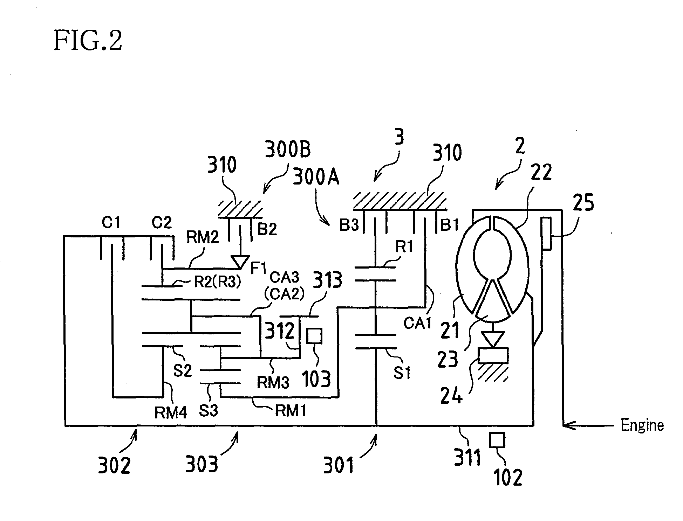

Torque Converter
The torque converter 2 is provided with, as shown in FIG. 2, a pump impeller 21 on an input-shaft side thereof, a turbine runner 22 on an output-shaft side thereof, a stator 23 providing torque amplification functionality, and a one-way clutch 24, and the torque converter 2 transmits driving force between the pump impeller 21 and the turbine runner 22 via a fluid.

The torque converter 2 is provided with a lock-up clutch 25 directly connecting an input side and an output side, and by fully engaging the lock-up clutch 25, the pump impeller 21 and the turbine runner 22 can be made to rotate as one. Furthermore, the turbine runner 22 can be made to rotate behind the pump impeller 21 with a prescribed amount of slip during driving by engaging the lock-up clutch 25 in a prescribed slip condition.

- Automatic Transmission -
The automatic transmission 3 is, as shown in FIG. 2, a planetary-gear type, multispeed transmission having a first gear section 300A, mainly comprising a single-pinion type, first planetary gear device 301, and a second gear section 300B, mainly comprising a single-pinion type, second planetary gear device 302 and a double-pinion type, third planetary gear device 303, configured coaxially, and the automatic transmission 3 changes a speed of rotation of an input shaft 311, transmits the rotation to an output shaft 312, and outputs the rotation from an output gear 313. The output gear 313 is engaged with a differential driven gear 6a of the differential gear device 6. It should be noted that, since the automatic transmission 3 and the torque converter 2 are configured substantially symmetrically about a centerline, a half thereof below the centerline is omitted from FIG. 2.

The first planetary gear device 301 constituting the first gear section 300A is provided with three rotating elements composed of a sun gear S1, a carrier CA1, and a ring gear R1, and the sun gear S1 is connected to the input shaft 311. Furthermore, by fixing the ring gear R1 to a housing case 310 via a third brake B3, the sun gear S1 can be made to rotate at a reduced speed with respect to the input shaft 311 with the carrier CA1 acting as an intermediate output member.

Within the second planetary gear device 302 and the third planetary gear device 303 constituting the second gear section 300B, four rotating elements RM1 to RM4 are formed through partial mutual connection of components thereof.

In specific terms, a sun gear S3 of the third planetary gear device 303 constitutes a first rotating element RM1, and a ring gear R2 of the second planetary gear device 302 and a ring gear R3 of the third planetary gear device 303 are mutually connected, forming a second rotating element RM2. In addition, a carrier CA2 of the second planetary gear device 302 and a carrier CA3 of the third planetary gear device 303 are mutually connected, forming a third rotating element RM3. Furthermore, a sun gear S2 of the secondary planetary gear device 302 constitutes a fourth rotating element RM4.

The second planetary gear device 302 and the third planetary gear device 303 are configured such that the carrier CA2 and carrier CA3 are formed from a common material and the ring gear R2 and the ring gear R3 are formed from a common material. Furthermore, a pinion gear of the second planetary gear device 302 is configured as a member of a Ravigneaux-type planetary gear train also serving as a second pinion gear of the third planetary gear device 303.

The first rotating element RM1 (i.e., the sun gear S3) is connected as one with the carrier CA1 of the first planetary gear device 301, serving as the intermediate output member, and rotation thereof is stopped through selective connection with the housing case 310 via a first brake B1. The second rotating element RM2 (i.e., the ring gear R2 and the ring gear R3) is selectively connected to the input shaft 311 via a second clutch C2, and in addition, rotation thereof is stopped through selective connection with the housing case 310 via a one-way clutch F1 and a second brake B2.

The third rotating element RM3 (i.e., the carrier CA2 and the carrier CA3) is connected as one with the output shaft 312. The fourth rotating element RM4 (i.e., the sun gear S2) is selectively connected with the input shaft 311 via a first clutch C1.

In the above automatic transmission 3, a gear range is set through engagement and/or disengagement of friction engagement elements such as the first clutch C1, the second clutch C2, the first brake B1, the second brake B2, the third brake B3, and the one-way clutch F1, etc. in a prescribed condition.

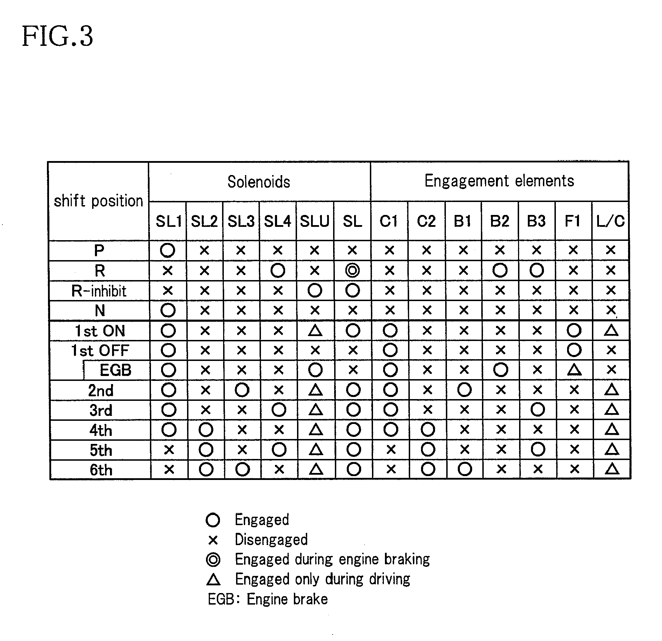

FIG. 3 is an engagement chart explaining an engagement operation of a clutch and brake for establishment of each of the gear ranges of the automatic transmission 3, and in FIG. 3, a circle indicates engagement and a cross indicates disengagement.

As shown in FIG. 3, when the clutch C1 of the automatic transmission 3 is engaged, a first (1st) gear range for forward travel is established, and in this condition, the one-way clutch F1 engages. Furthermore, the second brake B2 is engaged in an engine brake (EGB) mode of the first gear range. When the first clutch C1 and the first brake B1 are engaged, a second (2nd) gear range for forward travel is established. When the first clutch C1 and the third brake B3 are engaged, a third (3rd) gear range for forward travel is established.

Furthermore, when the first clutch C1 and the second clutch C2 are engaged, a fourth (4th) gear range for forward travel is established. When the second clutch C2 and the third brake B3 are engaged, a fifth (5th) gear range for forward travel is established. When the second clutch C2 and the first brake B1 are engaged, a sixth (6th) gear range for forward travel is established. Meanwhile, when the second brake B2 and the third brake B3 are engaged, a reverse (R) gear range is established.

A rotation speed (or a turbine speed) of the input shaft 311 of the above automatic transmission 3 is detected by an input-shaft rotation speed sensor 102. Furthermore, a rotation speed of the output shaft 312 of the automatic transmission 3 is detected by an output-shaft rotation speed sensor 103. A current gear range of the automatic transmission 3 can be determined based on a ratio of rotation speeds acquired from output signals of the input-shaft rotation speed sensor 102 and the output-shaft rotation speed sensor 103 (i.e., output rotation speed / input rotation speed).

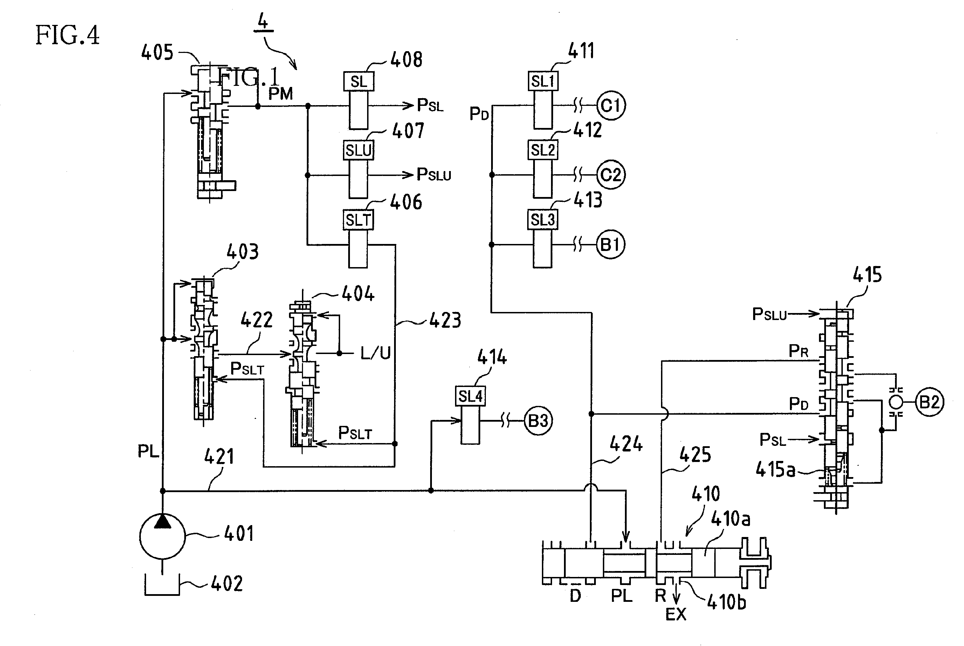

- Hydraulic Control Circuit-
Hereinafter, a hydraulic control circuit 4 of the automatic transmission 3 is explained by way of reference to FIG. 4.

The hydraulic control circuit 4 of this embodiment comprises an oil pump 401, a primary regulator valve 403, a secondary regulator valve 404, a modulator valve 405, a manual shift valve 410, a linear solenoid (SLT) 406, a linear solenoid (SLU) 407, a solenoid (SL) 408, a linear solenoid (SL1) 411, an linear solenoid (SL2) 412, a linear solenoid (SL3) 413, a linear solenoid (SL4) 414, and a B2 control valve 415, etc.

The oil pump 401 is connected to the crankshaft of the engine 1. The oil pump 401 is driven as a result of rotation of the crankshaft, drawing in an operating fluid (i.e., ATF) stored inside an oil pan 402 and generating hydraulic pressure. The hydraulic pressure generated by the oil pump 401 is adjusted by the primary regulator valve 403, and a line pressure PL is generated there from.

The primary regulator valve 403 operates using a throttle pressure P_{SLT} adjusted by the linear solenoid (SLT) 406 as a pilot pressure. The line pressure PL is supplied to the manual shift valve 410 via a first line hydraulic fluid channel 421. Furthermore, the line pressure PL is adjusted by the linear solenoid (SL4) 414 and supplied to a hydraulic pressure servo of the third brake B3.

The secondary regulator valve 404 operates using a throttle pressure P_{SLT} adjusted by the linear solenoid (SLT) 406 as a pilot pressure. The secondary regulator valve 404 adjusts a hydraulic pressure in a second line hydraulic fluid channel 422 whereinto excess operating fluid flowing (i.e., discharged) from the primary regulator valve 403 flows. A secondary pressure is generated by the secondary regulator valve 404.

In the hydraulic control circuit 4 of FIG. 4, the first line hydraulic fluid channel 421 and a D-range hydraulic fluid channel 424 communicate, and hydraulic pressure is supplied to the D-range hydraulic fluid channel 424 in a case wherein a spool 410a of the manual shift valve 410 is at a D position. The first line hydraulic fluid channel 421 and an R-range hydraulic fluid channel 425 communicate, and hydraulic pressure is supplied to the R-range hydraulic fluid channel 425 in a case wherein the spool 410a of the manual shift valve 410 is at an R position. In a case wherein the spool 410a of the manual shift valve 410 is at an N position, the D-range hydraulic fluid channel 424 and the R-range hydraulic fluid channel 425 communicate with a drain port 410b, and a D-range hydraulic pressure of the D-range hydraulic fluid channel 424 and an R-range hydraulic pressure of the R-range hydraulic fluid channel 425 are discharged from the drain port 410b.

The hydraulic pressure supplied to the D-range hydraulic fluid channel 424 is ultimately supplied to hydraulic servos of the first brake B1, the second brake B2, the first clutch C1, and the second clutch C2. The hydraulic pressure supplied to the R-range hydraulic fluid channel 425 is ultimately supplied to the hydraulic servo of the second brake B2.

The modulator valve 405 adjusts the line pressure to a constant pressure. The hydraulic pressure PM adjusted by the modulator valve 405 (i.e., the solenoid modulator pressure) is supplied to the linear solenoid (SLT) 406, the linear solenoid (SLU) 407, and the solenoid (SL) 408.

With a D-range pressure P_{D} output from the manual shift valve 410 as an initial pressure, the linear solenoid (SL1) 411 generates a first hydraulic pressure PC1 as a hydraulic pressure for controlling an engagement condition of the first clutch C1 and supplies the first hydraulic pressure PC1 to the hydraulic pressure servo of the first clutch C1.

With the D-range pressure P_{D} as an initial pressure, the linear solenoid (SL2) 412 generates a second hydraulic pressure PC2 as a hydraulic pressure for controlling an engagement condition of the second clutch C2 and supplies the second hydraulic pressure PC2 to the hydraulic pressure servo of the second clutch C2.

With the D-range pressure P_{D} as an initial pressure, the linear solenoid (SL3) 413 generates a third hydraulic pressure PB1 as a hydraulic pressure for controlling an engagement condition of the first brake B1 and supplies the third hydraulic pressure PB1 to the hydraulic pressure servo of the first brake B1.

With the line pressure PL as an initial pressure, the linear solenoid (SL4) 414 generates a fourth hydraulic pressure PB3 as a hydraulic pressure for controlling an engagement condition of the third brake B3 and supplies the fourth hydraulic pressure PB3 to the hydraulic pressure servo of the third brake B3.

The linear solenoid (SLT) 406 adjusts the solenoid modulator pressure PM in response to a control signal from the ECU 100 based on a throttle opening degree TAP detected by the throttle-opening degree sensor 101 and generates the throttle pressure P_{SLT}. The throttle pressure P_{SLT} is supplied to the primary regulator valve 403 via an SLT fluid channel 423. The throttle pressure P_{SLT} is used as a pilot pressure of the primary regulator valve 403.

The above linear solenoid (SLT) 406, linear solenoid (SLU) 407, solenoid (SL) 408, linear solenoid (SL1) 411, linear solenoid (SL2) 412, linear solenoid (SL3) 413, and linear solenoid (SL4) 414 are controlled by control signals sent from the ECU 100.

The B2 control valve 415 is connected to the D-range hydraulic fluid channel 424 and the R-range hydraulic fluid channel 425. The B2 control valve 415 selectively supplies hydraulic pressure from either the D-range hydraulic fluid channel 424 or the R-range hydraulic fluid channel 425 to the second brake B2. The B2 control valve 415 is controlled by the hydraulic pressures P_{SLU}, P_{SL} supplied from the linear solenoid (SLU) 407 and the solenoid (SL) 408 and by an urging force of a spring 415a.

In a case wherein the solenoid (SL) 408 is off and the linear solenoid (SLU) 407 is on, the B2 control valve 415 is in a condition as shown on the left side of FIG. 4. In such a case, the hydraulic pressure servo of the second brake B2 is supplied with a hydraulic pressure generated by adjusting the D-range pressure P_{D} with the hydraulic pressure supplied from the linear solenoid (SLU) 407 as a pilot pressure. Meanwhile, in a case wherein the solenoid (SL) 408 is on and the linear solenoid (SLU) 407 is off, the B2 control valve 415 is in a condition as shown on the right side of FIG. 4. In such a case, an R-range pressure P_{R} is supplied to the hydraulic pressure servo of the second brake B2.

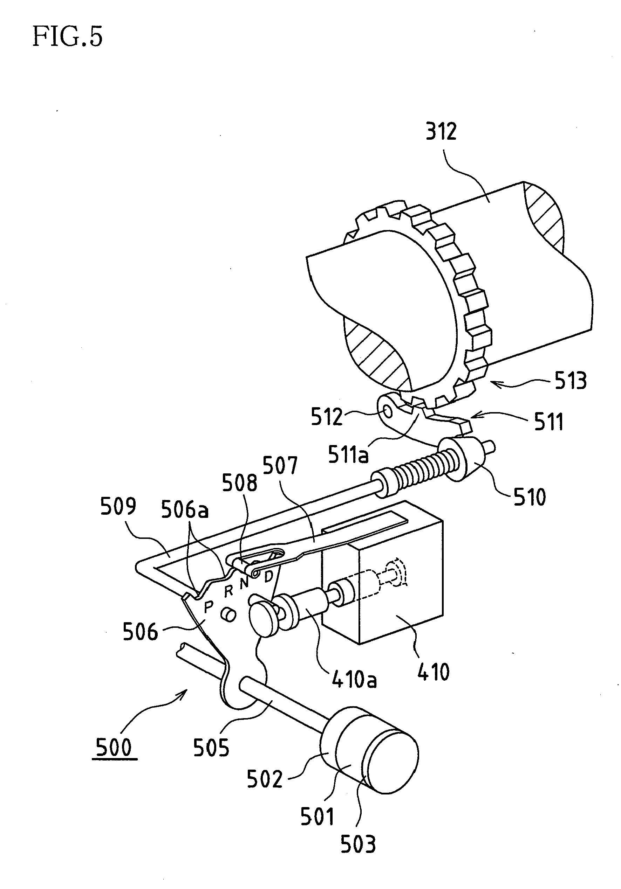

- Gear Shift Device -
Hereinafter, the gear shift device 5 is explained by way of reference to FIGs. 1 and 5.

The gear shift device 5 is a device for shifting a gear range of the automatic transmission 3 and comprises a gear-range shifting mechanism 500, a motor 501 driving the gear-range shifting mechanism 500, an encoder 503 detecting a rotation angle of a rotor of the motor 501, an NSW (neutral start switch) 504, a P switch 520, and a gear range switch 530, etc. The gear shift device 5 functions as a shift-by-wire device shifting a gear range of the automatic transmission 3 as a result of electronic control.

The P switch 520 is a switch for shifting the gear range from a gear range other than parking (i.e., a non-P gear range) to the parking gear range (i.e., the P gear range), and although not shown in the figures, comprises an indicator for indicating a condition of the switch to the user (or driver) and an input section receiving an instruction from the user, etc. Furthermore, as a result of an operation of the input section by the user (i.e., a turning-on operation), the P switch 520 can input an instruction to shift to the P gear range. The instruction resulting from the operation of the input section of the P switch 520 (i.e., the instruction to shift to the P gear range) is input into the ECU 100. It should be noted that, for example, a push switch, etc. may be used as the input section of the P switch 520.

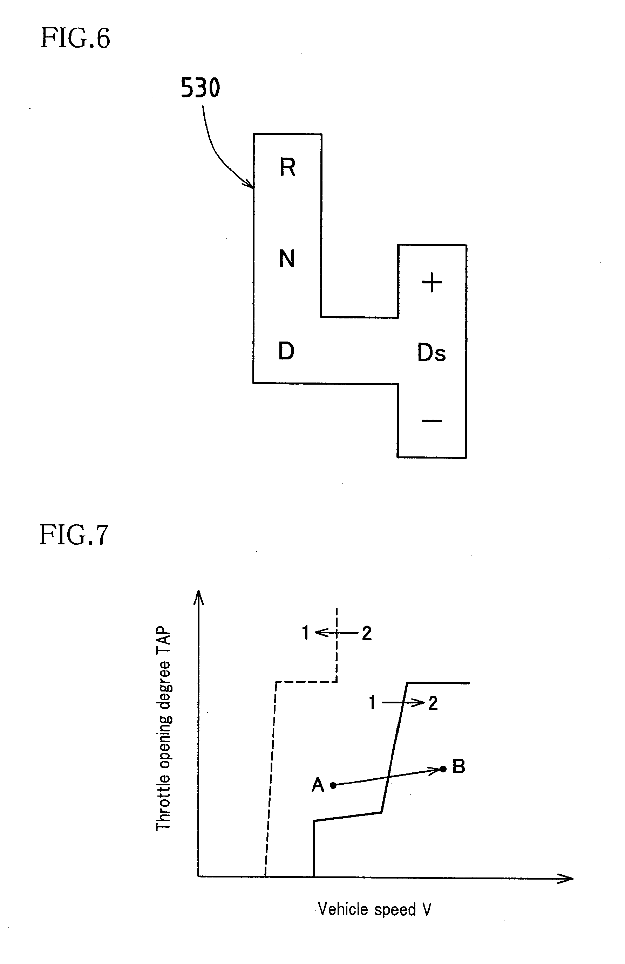

The gear range switch 530 is a switch operated by the user and is provided with a gear shift lever 531 capable of a displacement operation. Furthermore, as shown in FIG. 6, a reverse (R) range, a neutral (N) range, a drive (D) range, and a sequential (Ds) range are set on the gear range switch 530, and the gear range switch 530 is configured such that the gear shift lever 531 can be displaced to a gear range position desired by the user. When one of the gear ranges, composed of the R range, the N range, the D gear range, and the Ds range (including a [+] range and a [-] position range hereinafter), is selected by the user (through an operation thereof), the corresponding required gear-range information is input into the ECU 100.

It should be noted that, in a condition wherein the gear shift lever 531 of the gear range switch 530 is operated to the Sequential (Ds) position, the automatic transmission 3 is set to a manual gear-shift mode. The [+] position and the [-] position are provided at a front and rear side of the Ds position, respectively. The [+] position is a position whereto the gear shift lever 531 is operated upon a manual up-shift, and the [-] position is a position whereto the gear shift lever 531 is operated upon a manual down-shift. Furthermore, when the gear shift lever 531 is disposed at the Ds position and is then operated to the [+] position or the [-] position relative to the Ds position, constituting a neutral position, the gear range of the automatic transmission 3 is moved up or down, respectively.

The NSW 504 detects a rotation position of a detent plate 506 explained hereinafter, or in other words, detects whether a position of the manual shift valve 410 corresponds to the R, R, N, or D position. An output signal of the NSW 504 is input into the ECU 100.

Hereinafter, the gear-range shifting mechanism 500 is explained by way of reference to FIG. 5.

The gear-range shifting mechanism 500 is a mechanism for shifting the automatic transmission 3 to the P, R, N, or D gear range. A motor 501 serving as a drive source for the gear-range shifting mechanism 500 is, for example, a synchronous motor such as a switched reluctance (SR) motor and is provided with a speed reduction mechanism 502. Furthermore, the motor 501 also comprises an encoder 503 detecting a rotation angle of a rotor. The encoder 503 comprises, for example, a magnetic rotary encoder, and outputs a pulse signal to the ECU 100 in synchronization with a rotation of the rotor of the motor 501.

A manual shaft 505 is connected to an output shaft of the motor 501 of the gear-range shifting mechanism 500 (i.e., a rotation shaft of the speed reduction mechanism 502). A detent plate 506 for shifting the manual shift valve 410 of the hydraulic control circuit 4 of the automatic transmission 3 is fixed to the manual shaft 505.

A spool valve 410a of the manual shift valve 410 is connected to the detent plate 506, and by rotating the detent plate 506 as one with the manual shaft 505 using the motor 501, an operation amount of the manual shift valve 410 (i.e., a position of the spool valve 410a) is changed and the range of the automatic transmission 3 is shifted to the P, R, N, or D gear range.

Four indentations 506a for holding the spool valve 410a of the manual shift valve 410 at a position corresponding to each of the P, R, N, and D gear ranges are formed in the detent plate 506.

A detent spring (i.e., a leaf spring) 507 is provided above the detent plate 506. The detent spring 507 is fixed to the manual shift valve 410 as a cantilever. A roller 508 is secured to an end section of the detent spring 507. The roller 508 is pressed against the detent plate 506 by an elastic force of the detent spring 507. Furthermore, as a result of the roller 508 fitting into the indentation 506a of the detent plate 506 corresponding to a target gear range, the detent plate 506 is held at a rotation angle corresponding to the target gear range, and the spool valve 410a of the manual shift valve 410 is held at the target gear range position.

Meanwhile, a parking rod 509 is fixed to the detent plate 506. A cam 510 having a conical tapered form is provided at an end section of the parking rod 509, and a lock lever 511 makes contact with an outer circumferential surface of the cam 510 (or a cam surface). The lock lever 511 moves vertically about a rotation shaft 512 according to a position of the cam 510, a lock claw 511a of the lock lever 511 engages with a parking gear 513 or moves away therefrom as a result of the vertical motion of the lock lever 511, and consequently, rotation of the parking gear 513 can be locked or unlocked. Furthermore, the parking gear 513 is provided on the output shaft 312 of the automatic transmission 3, and when the parking gear 513 is locked by the lock lever 511, drive wheels 7 of the vehicle (see FIG. 1) are held in a condition wherein rotation thereof is stopped (i.e., a parked condition).

In the above gear-range shifting mechanism 500, the parking gear 513 becomes locked when the P gear range is selected due to the parking rod 509 moving in a direction of approach to the lock lever 511, a large diameter section of the cam 510 pushing up the lock lever 511, and the lock claw 511a of the lock lever 511 fitting into the parking gear 513, and as a result thereof, the output shaft 312 of the automatic transmission 3 (and the drive wheels) is held in a locked condition (i.e., the parked condition).

Meanwhile, when a gear range other than the P gear range is selected, the parking rod 509 moves in a direction away from the lock lever 511, and pursuant to the motion thereof, a section of the lock lever 511 making contact with the cam 510 changes from the large diameter section to a small diameter section and the lock lever 511 moves down. Consequently, the lock claw 511a of the lock lever 511 moves away from the parking gear 513, the parking gear 513 is unlocked, and the output shaft 312 of the automatic transmission 3 is held in a condition wherein rotation thereof is possible (i.e., a drivable condition).

- ECU -
The ECU 100 comprises a CPU, a ROM, a RAM, a backup RAM, and an input/output interface, etc.

As shown in FIG. 1, the throttle-opening degree sensor 101, the input-shaft rotation speed sensor 102, the output-shaft rotation speed sensor 103, the accelerator opening degree sensor 104, and the brake pedal sensor 105, etc. are connected to the ECU 100, and an output signal from each sensor, or in other words, signals indicating a throttle opening degree TAP of the throttle valve 11, an input shaft rotation speed and output shaft rotation speed of the automatic transmission 3, and operation amount of the accelerator pedal (i.e., an accelerator opening degree), and a presence or absence of a foot brake operation (i.e., brake on/off), etc., are supplied to the ECU 100. Furthermore, the encoder 503, the P switch 520, and the gear range switch 530 of the gear shift device 5 are connected to the ECU 100. In addition, the throttle motor 12 of the engine 1, the hydraulic control circuit 4, and the motor 501 of the gear shift device 5, etc. are connected to the ECU 100.

The ECU 100 sets a target rotation angle (i.e., a target encoder-count value) corresponding to the gear range selected by the gear shift lever 531 of the gear range switch 530, begins conductance of electricity to the motor 501, and then performs feedback control (F/B control) of the motor 501 so as to stop at a position whereat a detected rotation angle of the motor 501 (i.e., an encoder count value) is consistent with the target rotation angle.

Furthermore, the ECU 100 reads in an output signal of the NSW 504; determines a current rotation position of the detent plate 506 (i.e., an operation amount of the manual shift valve 410), or in other words, which of the P, R, N, and D (or Ds) gear range is selected, based on that output signal; compares the result of that determination with the gear range selected via a gear shift operation (i.e., the target range); and determines whether or not shifting of the gear range has been performed correctly.

The ECU 100 outputs a solenoid control signal to the hydraulic control circuit 4. The linear solenoids, etc. of the hydraulic control circuit 4 are controlled based on this solenoid control signal, and the first clutch C1, the second clutch C2, the first brake B1, the second brake B2, the third brake B3, and the one-way clutch F1, etc. of the automatic transmission 3 are engaged or disengaged in a prescribed condition so as to configure a prescribed gear range (i.e., the first to sixth gear range or the reverse gear range). In addition, the ECU 100 performs a "gear shift control" explained hereinafter.

- Gear Shift Control -
First of all, a gear-shift map used in the gear shift control of this embodiment is explained by way of reference to FIG. 7.

The gear-shift map shown in FIG. 7 has a vehicle speed V and the throttle opening degree TAP as parameters, comprises a plurality of zones for determining a suitable gear range for different vehicle speeds V and throttle opening degrees TAP, and is stored in the ROM of the ECU 100. The zones of the gear-shift map are separated by a plurality of gear-shift lines (i.e., gear range shift lines).

It should be noted that, in the gear-shift map of FIG. 7, a shift up line (i.e., a gear-shift line) is indicated by a solid line and a shift down line (i.e., a gear-shift line) is indicated by a dashed line. Furthermore, only gear-shift lines for [1st to 2nd] and [2nd to 1st] are indicated in the gear-shift map of FIG. 7.

Next, a basic operation of the gear shift control is explained.

The ECU 100 calculates the vehicle speed V from an output signal of the output-shaft rotation speed sensor 103, and also calculates the throttle opening degree TAP from an output signal of the throttle-opening degree sensor 101, and then it calculates a target gear range by referring to the gear-shift map of FIG. 7 based on the vehicle speed V and throttle opening degree TAP Furthermore, the ECU 100 determines the current gear range by calculating the ratio of rotation speeds acquired from output signals of the input-shaft rotation speed sensor 102 and the output-shaft rotation speed sensor 103 (i.e., output rotation speed / input rotation speed), and determines whether or not a gear-shift operation is necessary by comparing the current gear range and the target gear range.

In a case wherein, based on the results of the determination, a gear-shift operation is not necessary (i.e., a case wherein the current gear range and the target gear range are identical and the gear range is suitably set), the ECU 100 sends a solenoid control signal (i.e., a hydraulic pressure instruction signal) maintaining the current gear range to the hydraulic control circuit 4 of the automatic transmission 3.

Meanwhile, in a case wherein the current gear range and the target gear range are different, gear-shift control is performed. For example, in a case wherein a change takes place from, for example, a point A to a point B as shown in FIG. 7 due to modification of a driving condition of the vehicle from a condition wherein driving is taking place with the gear range of the automatic transmission 3 set to 1st, because the change straddles (or crosses) a 1st-to-2nd shift-up line, the target gear range calculated from the gear-shift map becomes 2nd. Consequently, a solenoid control signal (i.e., a hydraulic pressure instruction signal) for setting the 2nd gear range is output to the hydraulic control circuit 4 of the automatic transmission 3, and a gear shift from the 1st gear range to the 2nd gear range (i.e., a 1st-to-2nd up-shift) occurs.

- Vehicle Stop Control -
Hereinafter, examples of a vehicle stop control performed by the ECU 100 are explained.

Embodiment 1
First of all, a case wherein an instruction to shift from the D gear range to the P gear range (hereinafter also referred to as a "D-to-P instruction") is issued in response to an operation of the P switch 520 is explained.

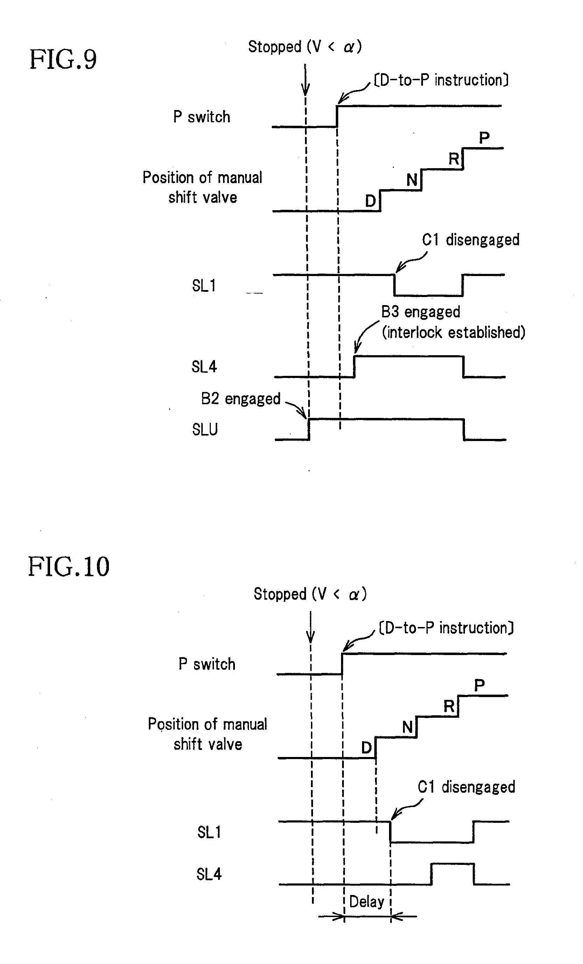

With the conventional control, as shown in FIG. 10, when a D-to-P instruction is issued through an operation of the P switch 520 in a case wherein the vehicle is substantially stopped (V < α) with the first gear range selected as a result of a brake operation of the user (i.e., the driver), the linear solenoid (SL1) 411 of the hydraulic control circuit 4 is turned off and the first clutch C1, forming the first gear range of the automatic transmission 3, is disengaged after the NSW 504 detects the manual shift valve 410 in the N position. For this reason, a delay occurs between the vehicle stop operation (i.e., an operation of the P switch 520) and cutting off of transmission of the driving force of the automatic transmission 3, and there is a possibility of the vehicle moving.

With the aim of resolving such problems, a feature of this embodiment is that motion of the vehicle is prevented by interlocking the interior of the automatic transmission 3 when an instruction to shift from the D gear range to the P gear range is issued.

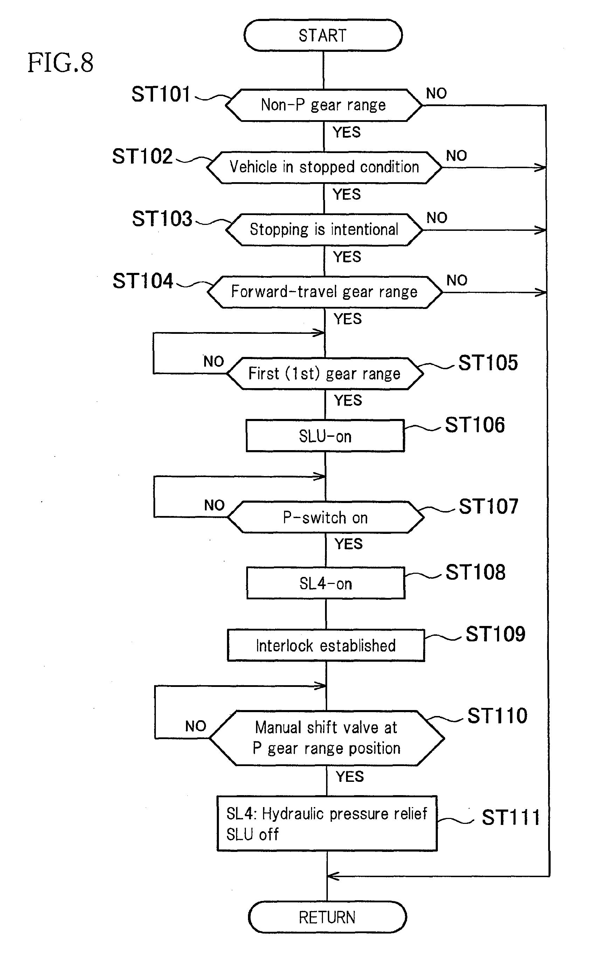

Hereinafter, a specific example of the control thereof is explained by way of reference to FIG. 8. FIG. 8 is a flowchart showing an example of a control routine of vehicle stop control. The control routine shown in FIG. 8 is executed repeatedly at a prescribed interval within the ECU 100.

In step ST101, it is determined whether or not the current gear range is a non-P gear range. In a case wherein the determination result thereof is a negative judgment (i.e., the current gear range is the P gear range), control returns from this routine. In a case wherein the determination result of the step ST101 is a positive judgment, control proceeds to step ST102.

In step ST102, it is determined whether or not the vehicle is in a stopped condition. In specific terms, in a case wherein a vehicle speed V calculated from an output signal of the output-shaft rotation speed sensor 103 is less than a stop judgment value α (for example, α = 1 to 2 km/h) (i.e., V < α), it is determined that the vehicle is in a stopped condition and control proceeds to step ST103. In a case wherein the determination result of the step ST102 is a negative judgment, control returns from this routine.

In the step ST103, it is determined whether or not the stopped condition of the vehicle is intentional. In specific terms, in a case wherein, for example, a vehicle brake is applied (i.e., an output signal from the brake pedal sensor 105 is on) or the throttle opening degree TAP acquired from an output signal of the throttle-opening degree sensor 101 is zero (i.e., TAP = 0), it is determined that the stopped condition of the vehicle is intentional, and control proceeds to step ST104. In a case wherein the determination result of the step ST103 is a negative judgment, control returns from this routine.

In the step ST104, it is determined whether or not the current gear range is a gear range for forward travel (i.e., a D or Ds range). In a case wherein the determination result of the step ST104 is a negative judgment, control returns from this routine. In a case wherein the determination result of the step ST104 is a positive judgment, control proceeds to step ST105.

In the step ST105, it is determined whether or not the current gear range is the first (1st) gear range. Specifically, in a case wherein the linear solenoid (SL1) 411 of the hydraulic control circuit 4 is on (i.e., the first clutch C1 is engaged), it is determined that the current gear range is the first gear range, and control proceeds to step ST106. It should be noted that, in a case wherein the determination result of the step ST105 is a negative judgment, a determination process of the step ST105 is repeated until the first gear range becomes the current gear range (i.e., until a positive judgment is made).

In the step ST106, the linear solenoid (SLU) 407 is controlled so as to turn on. Here, if the linear solenoid (SLU) 407 is turned on when the first gear range is selected, the second brake B2, serving as a friction engagement element that causes an engine brake to act, is engaged as shown in the engagement chart of FIG. 3. It should be noted that, if the brake is disengaged or the throttle opening degree TAP is no longer zero (i.e., TAP ≠ 0) as a result of an operation of the user after the linear solenoid (SLU) 407 is turned on, it is determined that the stopped condition of the vehicle is not intentional, the linear solenoid (SLU) 407 is turned off, and control returns from this routine.

Next, in step ST107, it is determined whether or not a turning-on operation of the P switch 520 was performed, and in a case wherein the determination result thereof is a positive judgment, control proceeds to step ST108. It should be noted that, in a case wherein the determination result of the step ST107 is a negative judgment, a determination process of the step ST107 is repeated until the P switch 520 is operated (i.e., until a positive judgment is made).

In the step ST108, the linear solenoid (SL4) 414 is controlled so as to turn on, and the third brake B3, forming the reverse (R) gear range, is engaged.

In a case wherein negative judgments are made in the above steps ST101 to ST105 and ST107 and processes of steps ST106 and ST108 have been executed, the first clutch C1, second brake B2, and third brake B3 of the automatic transmission 3 are engaged and interlocking of the interior of the automatic transmission 3 is established (in step ST109).

After interlocking of the interior of the automatic transmission 3 in this way, it is determined in step ST110 based on an output signal of the NSW 504 whether or not the manual shift valve 410 is at the P position. In a case wherein the determination result of the step ST110 is a positive judgment, control proceeds to step ST111. It should be noted that, in a case wherein the determination result of the step ST110 is a negative judgment, a determination process of the step ST110 is repeated until the manual shift valve 410 reaches the P position (i.e., until a positive judgment is made).

In the step ST111, the third brake B3 is disengaged (for example, sweep disengaged) by carrying out hydraulic pressure relief of the linear solenoid (SL4) 414, the second brake B2 is disengaged by turning off the linear solenoid (SLU) 407, and as a result thereof, the interlock of the automatic transmission 3 is released.

Hereinafter, the above vehicle stop control is explained in more concrete terms by way of reference to the timing chart of FIG. 9.

First of all, when a stop condition (V < α) is satisfied with the first gear range selected as a result of reduction of the vehicle speed due to a brake operation performed by the user (i.e., application of a brake), the linear solenoid (SLU) 407 of the hydraulic control circuit 4 is set to on and the second brake B2, causing the engine brake to act, is engaged (in the step ST106).

Next, when the user performs a turning-on operation of the P switch 520 in the vehicle stop condition (V < α), the linear solenoid (SL4) 414 is set to on in response to the D-to-P instruction resulting from the operation of the P switch, and the third brake B3, forming the reverse (R) gear range, is engaged (in the step ST108). At a point in time whereat the third brake B3 is engaged, the interlock of the automatic transmission 3 (i.e., engagement of the first clutch C1, the second brake B2, and the third brake B3) is established, the output shaft 312 of the automatic transmission 3 is fixed, and motion of the vehicle is stopped.

Then, after detection by the NSW 504 of the manual shift valve 410 at the N position, the linear solenoid (SL1) 411 is turned off and the first clutch C1 is disengaged. Subsequently, at a point in time whereat the NSW 504 detects the manual shift valve 410 at the P position, the automatic transmission 3 is set to the P gear range by setting the linear solenoid (SL4) 414 and the linear solenoid (SLU) 407 to off and setting the linear solenoid (SL1) 411 to on.

As described above, with the control of this embodiment, motion of the vehicle can be reliably stopped following a vehicle stop operation performed by the user, and therefore, the user's discomfort can be eliminated.

Here, although a condition wherein the manual shift valve 410 is at the R position occurs while the manual shift valve 410 moves from the N position to the P position as shown in FIG. 9, engagement of the second brake B2, forming the reverse (R) gear range, is prevented by maintaining the linear solenoid (SLU) 407 in the off condition (see the engagement chart of FIG. 3), and therefore, the vehicle will not move (i.e., move backward).

It should be noted that although the linear solenoid (SLU) 407 is turned on when the vehicle has adopted the stopped condition (V < α) with the control shown in FIG. 8, the control is not limited thereto, and interlocking of the interior of the automatic transmission 3 can be achieved by simultaneously turning on the linear solenoid (SLU) 407 and the linear solenoid (SL4) 414 when the P switch 520 is operated.

Although control upon issuance of an instruction to shift from the D gear range to the P gear range was explained in the above embodiment, motion of the vehicle can also be prevented by carrying out similar control to interlock the interior of the automatic transmission 3 upon issuance of an instruction to shift from the D gear range to the N range (hereinafter referred to as a "D-to-N instruction"). In specific terms, at point in time whereat the stop condition (V < α) is satisfied with the first gear range selected, the second brake B2, causing the engine brake to act, is engaged by turning on the linear solenoid (SLU) 407, and the third brake B3, forming the reverse (R) gear range, is engaged by turning on the linear solenoid (SL4) 414 in response to the D-to-N instruction, and as a result thereof, the interior of the automatic transmission 3 is interlocked.

Similarly, in a case wherein an instruction to shift from the R gear range to the P or N range (hereinafter referred to as an "R-to-P/N instruction") is issued, at point in time whereat the stop condition (V < α) is satisfied, the second brake B2, causing the engine brake to act, is engaged by turning on the linear solenoid (SLU) 407, and the first clutch C1, forming the first (1st) gear range, is engaged by turning on the linear solenoid (SL1) 411 in response to the R-to-P/N instruction, and as a result thereof, the interior of the automatic transmission 3 is interlocked.

Embodiment 2
Hereinafter, vehicle stop control upon actuator failure is explained.

In a case wherein the motor 501 of the gear shift device 5 has failed (for example, due to rotor sticking or wire disconnection, etc.), the manual shift valve 410 becomes unable to move, even when the user operates the gear shift lever 531. If such motor failure occurs while the D gear range (or the R gear range) is selected, the interior of the automatic transmission 3 remains in the D gear range even if, for example, the user issues a D-to-P instruction (instructing shifting from the D gear range to the P gear range), and therefore, there is a possibility of driving force being generated.

In this embodiment, in order to avoid such problems, motion of the vehicle following the issuance of an instruction to shift from the D gear range to the P gear range during motor failure is prevented by interlocking the interior of the automatic transmission 3.

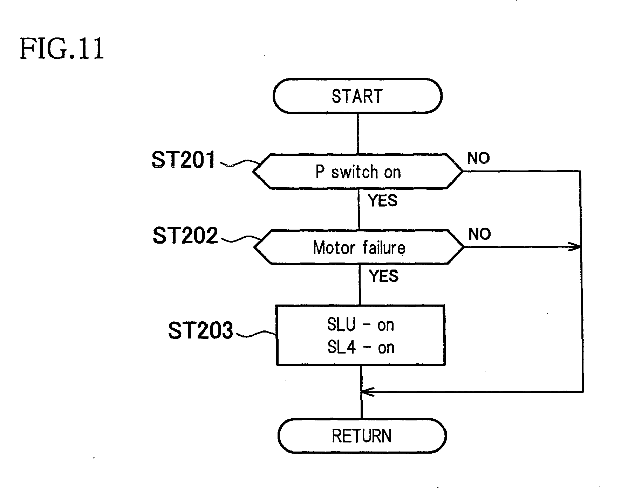

Hereinafter, a control thereof is explained in detail by way of reference to the flowchart of FIG. 11. The control routine shown in FIG. 11 is executed by the ECU 100.

In step ST201, it is determined whether or not a turning-on operation of the P switch 520 was performed, and in a case wherein the determination result thereof is a positive judgment, control proceeds to step ST202. In a case wherein the determination result of the step ST201 is a negative judgment, control returns from this routine.

In the step ST202, it is determined whether or not the motor 501 is failing while the D gear range is selected. In specific terms, in a case
wherein, for example, an output of the NSW 504 does not change regardless of feedback control for shifting from the D gear range to the above-instructed gear range (i.e., the P gear range) having started, it is determined that a failure due to rotor sticking or wire disconnection, etc. has occurred, and control proceeds to step ST203. In a case wherein the determination result of the step ST202 is a negative judgment, control returns from this routine.

Next, in a case wherein the motor 501 is failing (i.e., in a case wherein a positive judgment is made in the step ST202), in the step ST203, the second brake B2, causing the engine brake to act, is engaged by controlling the linear solenoid (SLU) 407 so as to turn on, and the third brake B3, forming the reverse (R) gear range, is engaged by controlling the linear solenoid (SL4) 414 so as to turn on.

In this way, motion of the vehicle during motor failure can be prevented by engaging the second brake B2, causing the engine brake to act, and the third brake B3, forming the reverse (R) gear range, when the D-to-P instruction is issued (i.e., the vehicle stop operation is performed by the user).

Although control upon issuance of an instruction to shift from the D gear range to the P gear range was explained in this embodiment, motion of the vehicle during motor failure can be prevented by similarly interlocking the interior of the automatic transmission 3 upon issuance of a D-to-N instruction, instructing shifting from the D gear range to the N range, or issuance of an R-to-P/N instruction, instructing shifting from the R gear range to the P gear range or N range.

Furthermore, although a case of failure of the motor 501 was explained in this embodiment, this embodiment is not limited thereto, and control similar to that of FIG. 11 can be executed even during failure in a case wherein seizure occurs for any reason in a mechanism section extending from the motor 501 to the manual shift valve 410.

Here, motion of the vehicle can be prevented by engaging the second brake B2, causing the engine brake to act, and the third brake B3, forming the reverse (R) gear range, upon a vehicle stop operation by the user, even in a case wherein a condition other than actuator failure is occurring, such as a case wherein the operating fluid is at a low fluid temperature or a shifting operation of the manual shift valve 410 is slow as a result of aging.

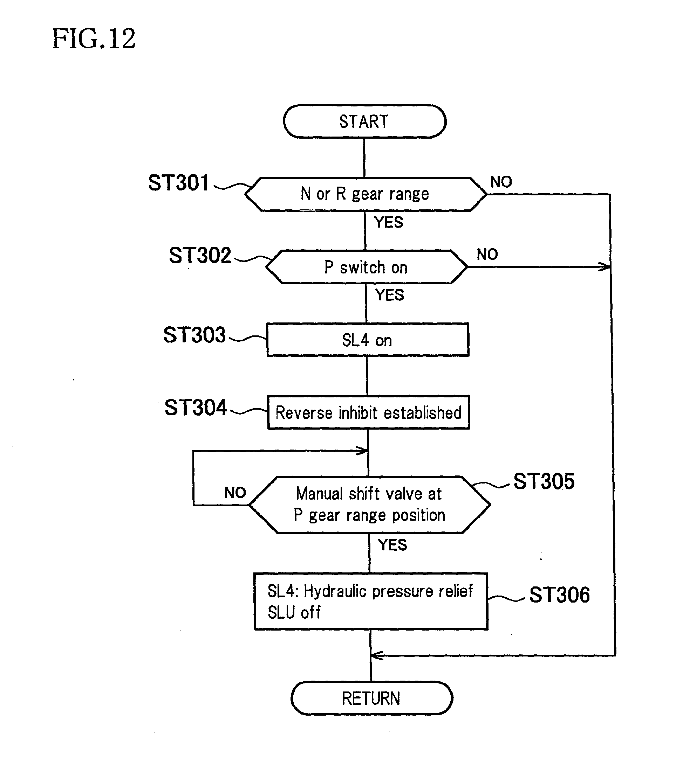

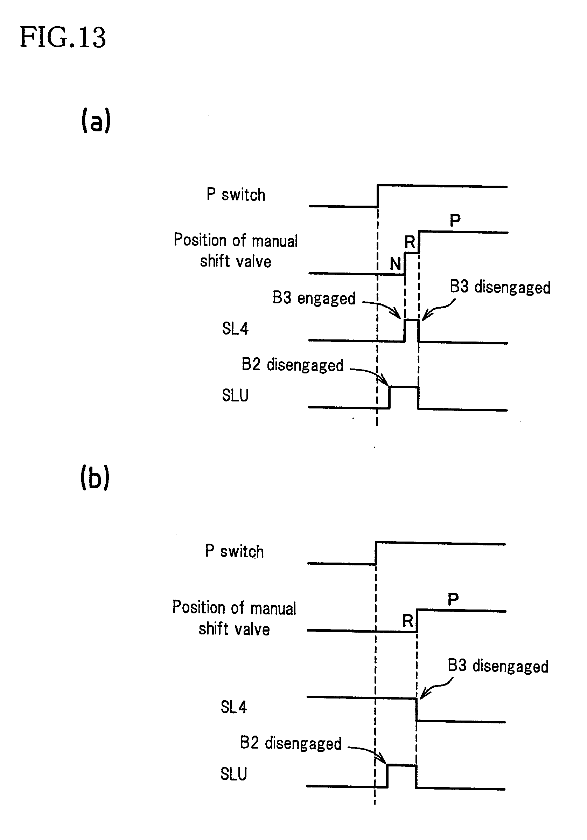

Embodiment 3
Hereinafter, a vehicle stop control preventing the vehicle from reversing upon an operation of the P switch 520 is explained by way of reference to the flowchart of FIG. 12 and the timing chart of FIG. 13. The control routine of FIG. 11 is executed repeatedly at a prescribed interval by the ECU 100.

In step ST301, it is determined whether or not the N range or the R gear range is the current gear range. In a case wherein the determination result thereof is a negative judgment (i.e., the current gear range is other than the N range or R gear range), control returns from this routine. In a case
wherein the determination result of the step ST301 is a positive judgment, control proceeds to step ST302.

In the step ST302, it is determined whether or not a turning-on operation of the P switch 520 was performed, and in a case wherein the determination result thereof is a positive judgment, control proceeds to step ST303. In a case wherein the determination result of the step ST302 is a negative judgment, control returns from this routine.

In the step ST303, the linear solenoid (SLU) 407 is controlled so as to turn on and the second brake B2, forming the reverse (R) gear range, is disengaged. As a result of the disengaging of the second brake B2, a reverse inhibit condition (R-inhibit of FIG. 3) is established (in step ST304) and transmission of reverse driving force in the interior of the automatic transmission 3 is cut off.

Next, it is determined, in step ST305, based on an output signal of the NSW 504, whether or not the manual shift valve 410 is at the P position, and if the determination result thereof is a positive judgment, control proceeds to step ST306. In a case wherein the determination result of the step ST305 is a negative judgment, a determination process of the step ST305 is repeated until the manual shift valve 410 reaches the P position (i.e., until a positive judgment is made).

Next, in the step ST306, the third brake B3 is disengaged (for example, sweep disengaged) by carrying out hydraulic pressure relief of the linear solenoid (SL4) 414, and the second brake B2 is disengaged by turning off the linear solenoid (SLU) 407. In this way, by disengaging the third brake B3 and the second brake B2, the gear range of the automatic transmission 3 can be set to the P gear range.

Here, in the above vehicle stop control, when a turning-on operation of the P switch 520 is performed while the N range is selected, although a condition wherein the manual shift valve 410 is at the R position occurs while the manual shift valve 410 moves from the N position to the P position, and the third brake B3, forming the reverse (R) gear range, is in a state of engagement during a period wherein the manual shift valve 410 passes through the R position as shown in FIG. 13(a), engagement of the second brake B2 is made impossible by turning on the linear solenoid (SLU) 407 upon the operation of the P switch 520, and therefore, occurrence of reverse driving force can be prevented.

Furthermore, although the third brake B3 is in a state of engagement in a case wherein a turning-on operation of the P switch 520 is performed while the R gear range is selected as shown in FIG. 13(b), engagement of the second brake B2 is made impossible by turning on the linear solenoid (SLU) 407 in response to the operation of the P switch 520, and therefore, occurrence of reverse driving force can be prevented.

In this embodiment, as reverse inhibit control is executed as explained above so as to prevent engagement of the second brake B2, serving as a friction engagement element that forms the reverse (R) gear range of the automatic transmission 3, when the P switch 520 is operated while the N or R gear range is selected, the vehicle can be prevented from reversing following a vehicle stop operation of the user (i.e., an operation of the P switch 520).

It should be noted that, although it is determined in the step ST301 whether or not the N range or the R gear range is the current gear range in this embodiment, this embodiment is not limited thereto, and it can be determined whether or not the D gear range is the current gear range.

Embodiment 4
A feature of this embodiment is that, when stopped with the first gear range selected (i.e., upon a vehicle-stop operation), the second brake B2, causing the engine brake to act, is engaged by setting the linear solenoid (SLU) 407 to on and the third brake B3, forming the reverse (R) gear range, is engaged by setting the linear solenoid (SL4) 414 to on, and therefore, hill hold control is realized.

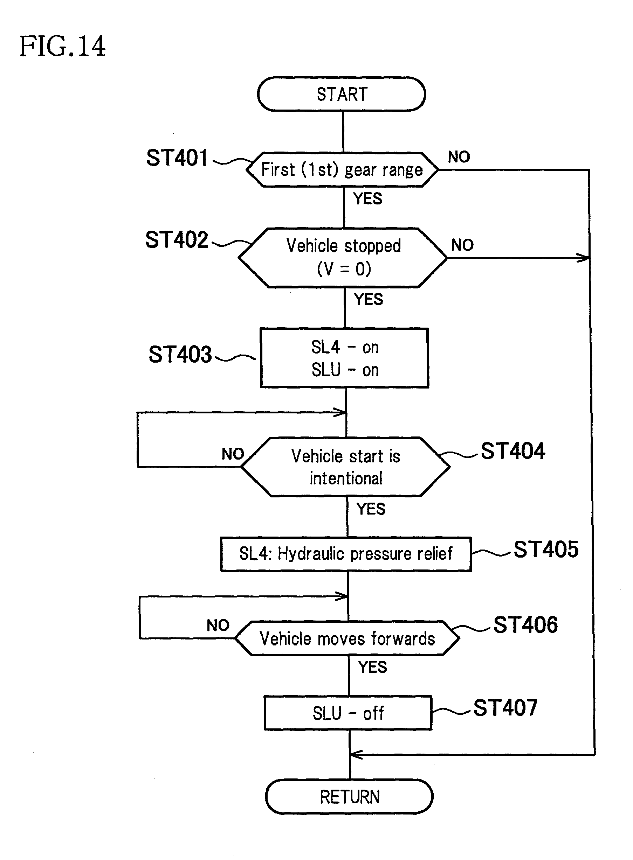

Hereinafter, a control thereof is explained in detail by way of reference to the flowchart of FIG. 14. The control routine shown in FIG. 14 is executed by the ECU 100.

In step ST401, it is determined whether or not the first (1st) gear range is the current gear range, and in a case wherein the determination result thereof is a positive judgment, control proceeds to step ST402. In a case wherein the determination result of the step ST401 is a negative judgment, control returns from this routine.

In the step ST402, it is determined whether or not the vehicle has fully stopped (V = 0) due to a brake operation performed by the user, and if the determination result thereof is a positive judgment, control proceeds to step ST403. In a case wherein the determination result of the step ST402 is a negative judgment, control returns from this routine.

In the step ST403, the third brake B3, forming the reverse (R) gear range, is engaged by controlling the linear solenoid (SL4) 414 so as to turn on, and the second brake B2, causing the engine brake to act, is engaged by controlling the linear solenoid (SLU) 407 so as to turn on. Hill hold control is realized by engaging the third brake B3, forming the reverse (R) gear range, and the second brake B2, causing the engine brake to act, in this way, and therefore, even if the vehicle brake is off while the vehicle is stopped on an incline, the vehicle can be prevented from reversing.

Next, in step ST404, it is determined whether or not the vehicle start is intentional. In specific terms, in a case wherein, for example, the accelerator is applied (as determined from an output signal of the accelerator opening degree sensor 104), it is determined that the vehicle start is intentional, and control proceeds to step ST405. It should be noted that a determination process of the step ST404 is repeated until a positive judgment is made.

In the step ST405, the third brake B3 is disengaged (for example, sweep disengaged) by carrying out hydraulic pressure relief of the linear solenoid (SL4) 414. When the vehicle moves off as a result of disengagement of the third brake B3 (i.e., when a positive judgment is made in step ST406), the second brake B2 is disengaged by controlling the linear solenoid (SLU) 407 so as to turn off. Disengagement of the second brake B2 is performed when driving conditions of the vehicle (i.e., the vehicle speed V and throttle opening degree TAP) correspond to a state prior to the 1st-to-2nd shift of the gear shift map shown in FIG. 7. In this way, when hill hold control is released, the third brake B3, forming the reverse (R) gear range, is disengaged first, and therefore, rolling backwards of the vehicle on an incline can be prevented.

With the present invention, all of the controls of the above-explained Embodiment 1 to Embodiment 4 may be executed in the form of parallel processing by the ECU 100, or any two or three controls of Embodiment 1 to Embodiment 4 may be executed in the form of parallel processing by the ECU 100. Furthermore, any one of the controls of Embodiment 1 to Embodiment 4 may be executed by the ECU 100.

- Other Embodiments -
Although the above embodiments were explained in terms of an automatic transmission having a gear range switch provided with a gear shift lever, the present invention is not limited thereto, and for example, the present invention may also be applied as a controller for a shift-by-wire type of automatic transmission using a gear range switch comprising a button-type switch.

Although an example of application of the present invention to the controller for an automatic transmission of a vehicle whereupon a gasoline engine is mounted is shown in the above embodiments, the present invention is not limited to this, and application is possible also in a controller for an automatic transmission of a vehicle whereupon another engine such as a diesel engine, etc. is mounted. Furthermore, the source of driving force of the vehicle may, other than an engine (internal combustion engine), be an electric motor or a hybrid-type source of driving force comprising an engine and an electric motor.

In addition, the present invention may be applied not only to an FF (front-engine, front-drive) type vehicle, but also to an FR (front-engine, rear-drive) type vehicle and a four-wheel drive vehicle.

It should be noted that without departure from the intention, gist, and principal characteristics thereof, the present invention can have many other embodiments. Accordingly, the above-described embodiments are no more than simple examples and should not be interpreted in a limited manner. The scope of the present invention is set forth by the scope of the patent claims, and the disclosure is in no way binding. In addition, all modifications and changes within a scope equivalent to that of the patent claims are within the scope of the present invention.
During a period wherein a manual shift valve moves to a P gear range position after issuance of a D-to-P instruction instructing that a vehicle be stopped, an interior of an automatic transmission is interlocked. Specifically, the interior of the automatic transmission is interlocked by, in addition to engagement of a first clutch serving as a friction engagement element of a first gear range of the automatic transmission, by engaging a second brake causing an engine brake to act and a third brake forming a reverse gear range, and therefore, motion of the vehicle is prevented in a period between issuance of the P instruction instructing a vehicle stop operation, and actual shifting to the P gear range.

## Claims

1. A controller for an automatic transmission mounted on a vehicle and shifting a gear range using an actuator, wherein:
an interior of the automatic transmission is interlocked during a period wherein a shift member moving due to driving of the actuator moves to a stopped-position gear range or a neutral gear range following issuance of an instruction to shift from a forward-travel gear range to the stopped-position gear range or the neutral gear range or an instruction to shift from a reverse-travel gear range to the stopped-position gear range or the neutral gear range.

2. The controller for an automatic transmission of claim 1, wherein:
a position determination means for determining that the shift member moving due to driving of the actuator has reached the stopped-position gear range or the neutral gear range is provided, and the interlocking of the automatic transmission is released when the shift member has reached the stopped-position gear range or the neutral gear range.

3. The controller for an automatic transmission of claim 1 or claim 2, wherein:
the automatic transmission is a stepped automatic transmission establishing a plurality of gear ranges having different gear ratios by selectively engaging a plurality of friction engagement elements, and
the automatic transmission is interlocked by engaging a friction engagement element causing an engine brake to act when the automatic transmission is set to a first gear range, and a friction engagement element of a prescribed gear range other than the first gear range.

4. A controller for an automatic transmission mounted on a vehicle and shifting a gear range using an actuator, wherein:
a failure determination means for determining failure of the actuator is provided, and
an interior of the automatic transmission is interlocked in a case wherein failure of the actuator in a forward-travel gear range or a reverse-travel gear range is determined by the failure determination means following issuance of an instruction to shift from the forward-travel gear range to a stopped-position gear range or a neutral gear range or an instruction to shift from the reverse-travel gear range to the stopped-position gear range or the neutral gear range.

5. The controller for an automatic transmission of claim 4, wherein:
the automatic transmission is a stepped automatic transmission establishing a plurality of gear ranges having different gear ratios by selectively engaging a plurality of friction engagement elements, and
the automatic transmission is interlocked by engaging a friction engagement element causing an engine brake to act when the automatic transmission is set to a first gear range, and a friction engagement element forming the reverse-travel gear range.

6. A controller for an automatic transmission mounted on a vehicle and shifting a gear range using an actuator, wherein:
reverse-travel driving of the automatic transmission is prohibited following issuance of an instruction to shift to a stopped-position gear range.

7. The controller for an automatic transmission of claim 6, wherein:
the automatic transmission is a stepped automatic transmission establishing a plurality of gear ranges having different gear ratios by selectively engaging a plurality of friction engagement elements, and
following issuance of the instruction to shift to the stopped-position gear range, engagement of a friction engagement element forming a reverse-travel gear range is prohibited.

8. A controller for an automatic transmission mounted on a vehicle and selecting a gear range using an actuator, wherein:
the automatic transmission is a stepped automatic transmission establishing a plurality of gear ranges having different gear ratios by selectively engaging a plurality of friction engagement elements, and
when the vehicle is stopped in a forward-travel gear range, a friction engagement element forming a reverse-travel gear range and a friction engagement element of a prescribed gear range other than the reverse-travel gear range are engaged.

9. The controller for an automatic transmission of claim 8, wherein:
upon start of the vehicle, the friction engagement element of a prescribed gear range other than the reverse-travel gear range is disengaged after disengaging the friction engagement element of the reverse-travel gear range.
